# EUROPEAN PATENT SPECIFICATION

(11) **EP 1 619 828 B1**
(45) Date of publication and mention of the grant of the patent: **03.09.2008**
(21) Application number: 04730186.6
(22) Date of filing: 29.04.2004
(51) Int. Cl.: H04L 12/24, H04L 12/28, H04L 12/56, H04L 12/44

(54) **A METHOD OF TRANSMITTING A MESSAGE**
VERFAHREN ZUR NACHRICHTENÜBERTRAGUNG
PROCEDE DE TRANSMISSION D'UN MESSAGE

(30) Priority: 29.04.2003 CN 03123070
(43) Date of publication of application: 25.01.2006
(73) Proprietor: Huawei Technologies Co., Ltd., Longgang District, Shenzhen, Guangdong 518129 (CN)
(72) Inventor: WANG, Yuxiang, Huawei Administration Building, Shenzhen, Guangdong 518129 (CN); XU, Qianfeng, Huawei Administration Building, Shenzhen, Guangdong 518129 (CN); QIAO, Qian, Huawei Administration Building, Shenzhen, Guangdong 518129 (CN); ZHENG, Ping, Huawei Administration Building, Shenzhen, Guangdong 518129 (CN)
(74) Representative: Reinhard - Skuhra - Weise & Partner
(86) International application number: PCT/CN2004/000424
(87) International publication number: WO 2004/102880

(56) References cited:
- EP-A- 1 193 917
- EP-A2- 1 162 796
- CN-A- 1 333 613
- CN-A- 1 357 997
- CN-A- 1 371 202
- US-A- 6 128 665
- US-A1- 2002 174 307
- US-B1- 6 198 741
- INTERNATIONAL BUSINESS MACHINES CORPORATION: "Forwarding domains across multiple virtual LANs" RESEARCH DISCLOSURE, MASON PUBLICATIONS, HAMPSHIRE, GB, vol. 416, no. 117, December 1998 (1998-12), XP007123705 ISSN: 0374-4353
- "Virtual Bridged Local Area Networks" IEEE STANDARDS FOR LOCAL AND METROPOLITAN AREA NETWORKS, [Online] 1998, pages I-199, XP002393274 Retrieved from the Internet: URL:http://ieeexplore.ieee.org/iel4/6080/1 6272/00753056.pdf?isnumber=16272&prod=STD& arnumber=753056&arSt=&ared=&arAuthor=> [retrieved on 2006-08-02]

## Description

### Field of the Technology

The invention relates to the message transmitting field and net security field, especially to a method for message transmitting that separates subscribers of a network into different subnets based on port set (wherein the subnet includes at least one port), and transmits the message according to the separating result.

### Background of the Invention

Along with the popularity and performance improvement of a network, network scale and complexity are increased rapidly. This brings both to the users: great convenience and a series of problems, among them the most important problems are the network management problem and network security problem. For making the management easier, a large-scale network should be separated into several small-scale subnets (different network units). Also, for large-scale enterprise or organization, there is a special security requirement for transmitting the message, in order to satisfy the requirement; the network used by the enterprise or organization needs to be separated into several small-scale subnets for different departments of the enterprise or organization. Messages are transmitted in the different subnets respectively, so as to satisfy the requirement of management and security for the network.

In prior art, it is mainly used the Virtual Local Area Network (VLAN) to separate a large-scale network into different subnets, each VLAN identifier represents different subnets respectively. In the case of applying VLAN to separate the network, because different VLAN identifiers represents different subnets respectively, the message transmitted by the network subscriber needs to be added VLAN identifier which is used to identify different subnets. When messages are transmitted, the different messages with the VLAN identifiers thereof are distinguished according to the VLAN identifiers carried in the messages respectively, and the messages are transmitted to the corresponding subnets, which are represented by the VLAN identifiers of corresponding messages. In this way, a network is logically separated into different subnets, and the messages can be transmitted based on the separating result.

Although with the above technique, the messages can be transmitted according to the network separating, but it has the following disadvantages:
(1) With the method of prior art, the subnets of network are separated based on the VLAN, the sent message is identified by the VLAN identifier carried in the message, and then based on the identification result, the message is sent to the subnet represented by the said VLAN identifier; This means that with a corresponding VLAN identifier, the message can enter the appropriate subnet represented by that VLAN identifier. Therefore, if an attacker knows the VLAN identifier of a subnet and makes an attack message with that VLAN identifier, the attack message can enter the subnet represented by the corresponding VLAN identifier. This is a security problem and can also bring big hidden trouble for the network.
(2) In the method of prior art, because the network is divided into different subnets by using VLAN, it needs to use VLAN identifiers to identify the subnets, while the address resource of the VLAN is limited, which means that if a subnet uses a VLAN identifier to identify itself, the other subnets can only identify themselves with the left VLAN identifiers in the limited VLAN address resource. This brings the disadvantage that the users in the network cannot make use of the entire VLAN address resource, and further brings the disadvantage that it is hard for the user to use VLAN address resource to make further separation of its subnet. Furthermore, if there are large amounts of subnets, or the subnet needs to be further separated, the number of required VLAN identifiers will increase accordingly, and even the requirement of the separating can not be satisfied, which makes the prior art hard to apply.

In a published standard, "Virtual Bridged Local Area Networks" IEEE STANDARDS FOR LOCAL AND METROPOLITAN AREA NETWORKS, [Online] 1998, pages 1-199, XP002393274, the VLAN identifier is introduced in details. In the prior art, the network can be divided based on ports, referring to an European patent of patent number EP-A-1193917 A2 and "Forwarding domains across multiple virtual LANs" RESEARCH DISCLOSURE, MASON PUBLICATIONS, HAMPSHIRE, GB, vol.416, no.117, December 1998 (1998-12).

### Summary of the Invention

In view of above facts, objective of the invention is to provide a method that separates the network into subnets based on port sets, and a message is transmitted based on the separating result. With this method, the security problem mentioned above will be avoided, and every user in the network can use entire address resource of VLAN exclusively.

For the above objective, the invention provides a method for transmitting message, wherein, ports of a network are divided into multiple first port sets respectively corresponding to multiple subnets wherein one port belongs to one first port set; each first port set is separated into multiple second port sets; and a first correspondence relationship between the first port sets and the subnets is established, each first port set occupies overall VLAN identifiers, each second port set occupies a different VLAN identifier in the overall VLAN identifiers ; and
when a message is received, including:
determining a subnet from which the message is sent according to input port information of the message, and determining a first port set corresponding to the determined subnet according to the first correspondence relationship; and
identifying a VLAN identifier carried in the message, determining a second port set which is separated from the first port set and corresponds to the VLAN identifier, and transmitting the message via at least one port in the second port set.

The ports of the network which are divided into the multiple first port set includes: the ports of one switch in the network.

The ports of the network which are divided into the multiple first port set includes: the ports of multiple interconnected switches in the network.

The above solution further includes: obtaining a third port set by performing a protocol calculation for the message, the third port set comprising at least one port to which the message is to be transmitted based on the protocol applied to the message; and obtaining an intersection set of the second port set and the third port set, and transmitting the message via one port in the intersection set if the intersection set is not null.

The first correspondence relationship is denoted as a correspondence relationship between indexes of the subnets and the first port sets; and the first correspondence relationship is denoted as a lookup table; the index of the subnet from which the message is sent is obtained by searching the lookup table according to the input port information of the message; and the first port set corresponding to the subnet from which the message is sent is determined by searching the lookup table according to the obtained index.

The first port set is denoted as a mask code; and/or the second port set is denoted as the mask code. And the third port set is denoted as the mask code.

The method mentioned above deploys hardware information such as port information to identify and transmit a message of subnet, and subnets in the network are strictly separated with each other, so the communication is secure. Further, since the subnets are separated using the port information, so every user can deploy the entire address resource of the VLAN, the user will not need to share the limited address resource of the VLAN with other users any more, the freedom of network planning is increased for every user. The method deploys the port information, which is included in the message transmitted in the present network, to separate the network into different subnets, so the method will be easier to use in the present networks without too much changes on them.

### Brief Description of the Drawings

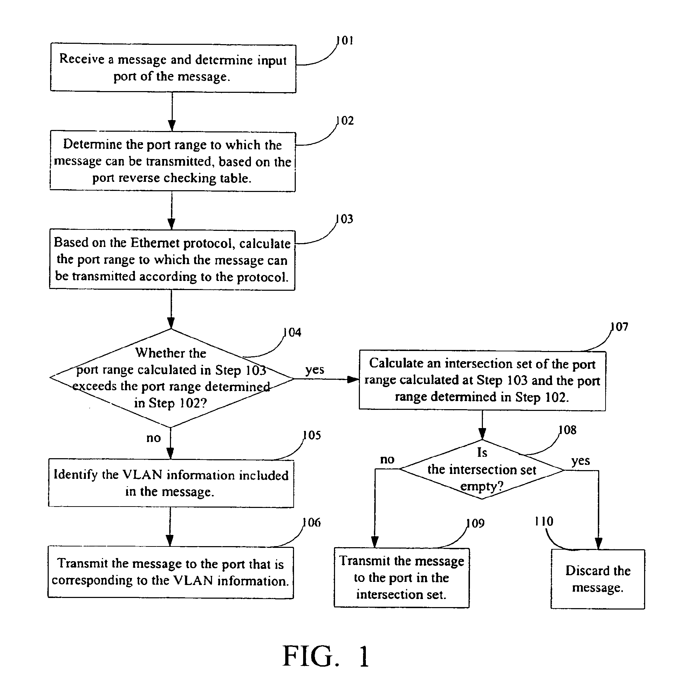

Figure 1 shows a flowchart of an embodiment of the invention that implements the message transmitting.

### Embodiments of the Invention

In the method of the invention, based on the port sets the network is separated into different subnets, and then the message is transmitted based on the separating result. With the method, the subnet which message belongs to is distinguished by the port information carried in the message, and the message is transmitted according to the port range to which the message can be transmitted. Wherein, each port set at least includes a port, and the ports in a port set belong to a subnet.

The invention will be described in more detail with reference to drawings and an embodiment. In the embodiment below, a physical bridge is applied as a switch. In the other embodiments of the present invention, the method of the present invention can also apply to other Ethernet switches, which will not affect the implement of the present invention.

Before transmitting a message, the network are separated into different subnets based on port sets, and the separating result is stored in the switch for message transmitting in order to make it possible to transmit the message according to the separating result with the method provided by the present invention. In a telecommunication system, because the relationship of a port and a subnet is exclusive, i.e., one port can only belong to one subnet, the network can be separated into different subnets based on the port set. In this embodiment, eight ports of the switch, which is a physical bridge, are separated as follows: ports 3 and 4 belong to the subnet A; ports 1, 2, 5 and 6 belong to the subnet B; and ports 7 and 8 belong to the subnet C. This result is stored in the physical bridge with a port lookup table (the Table 1). The Table 1 is shown as the following:

**Table 1**

| **Index (subnet name)** | **Mask code (included ports in the subnet)** |
|---|---|
| Subnet A | 00110000 |
| Subnet B | 11001100 |
| Subnet C | 00000011 |

In Table 1, every row of the index column is a subnet name, and every row of the mask code column shows a port set that is appropriate for the subnet. Each bit in a mask code represents a port in the physical bridge; if a bit is "0", the port that is represented by this bit does not belong to the subnet; if the bit is "1", the port belongs to the subnet. Taking the table 1 as an example, the mask code 00110000 of the subnet A shows that the port set including ports 3 and 4 is appropriate for the subnet A; similarly, the mask code 11001100 of the subnet B shows that the port set including ports 1, 2, 5 and 6 is appropriate for the subnet B, and the mask code 00000011 in of the subnet C shows that the port set including ports 7 and 8 is appropriate for the subnet C.

It is required that communication between users in a subnet is secure, and communication between different subnets is inhibited. So when network has been separated into subnets based on the port sets, and the separating result has been stored in the switch; the switch will guarantee that the normal communication only happens between ports 3 and 4; between ports 1, 2, 5 and 6; between ports 7 and 8. Ports that belong to different port sets cannot communicate, for example, ports 3 and 4 cannot communicate with anyone of ports 1, 2, 5, 6, 7 and 8. In this way, normal communication only happens within a subnet such as subnet A, subnet B and subnet C, and communication is inhibited between subnets.

In this embodiment, there is only one physical bridge, because it is easier for description. In other embodiments, there are multiple switches for message transmitting, some of the switches are set into one group according to the actual requirement, and the switches in one group are interconnected with such as optical fiber. In these cases, in every group of switches, all ports of the switches in the group are applied as port set to separate the network, in this way; the applied area of this method is extended. For example, the switches are distributed all over the country, and the ports are managed based on different groups, which are appropriate for different enterprises or organizations, without caring whether or not these ports are located on a same area, so the flexibility of the present invention can be increased.

The implement of separating the network described as above is only an embodiment of the present invention; it is for describing the invention not for limiting the scope of the invention.

Having been separated the network into subnets as mentioned above, referring to figure 1 the invention is implemented with the following steps:

Step 101, the switch receives a message, and determines from which port the message inputs. In this embodiment, when receiving the message, the physical bridge can determine the input port of the message. In detail, when the message processed by the physical layer of the physical bridge, the input port information is added to the message, and then the message with the input port information is transmitted to the upper layers, with said input port information, and the physical bridge can determine the input port of the message.

In other embodiments, when the network is separated based on all ports of switches in one group, the input port of the message is determined with the same way in Step 101 mentioned above. The mode of separating network does not affect the implementation of Step 101.

Step 102, based on the input port of the message determined in the Step 101, the bridge finds the subnet to which the input port belongs, and based on the found subnet, the port set that belongs to the subnet is obtained. Therefore, the port range to which the message can be determined, wherein the message is received from the input port by the physical port, can be sent. In this embodiment, Step 102 is implemented with the port lookup table stored in the bridge. Taking a message inputted from Port 1 as an example, when the physical bridge has received the message, it determines that the message is inputted from Port 1, and from Table 1 it obtains that port 1 belongs to subnet B. Again, from Table 1 it determines that the port set that is appropriate for subnet B includes ports 1, 2, 5 and 6, and the port set consisted of the ports 1, 2, 5 and 6 is the set to be the port range to which the message can be transmitted. For the message carrying other input port information, it can also apply the above way to determine the ports to which the message can be sent.

Step 103, according to the Ethernet protocol, calculating the port range to which the message can be transmitted base on the protocol. Wherein the calculation is a protocol calculating according to the message type. Taking a multicast message as an example, according the multicast message protocol, the message can only be transmitted to the registered ports, so with the protocol calculating of Step 103, the information of the registered ports can be obtained, and the port range consisted of the registered ports is determined to be the set to which the multicast message can be transmitted. If the message is another type message, it can apply other protocol to calculate the port range to which the message can be transmitted. The calculation of said port range is a known technique in the art; technician in this field can do it without difficulty.

Step 104 determining whether the port range calculated in Step 103 exceeds the port range determined in Step 102, if it is, go to steps 107 to 110, and the steps 105 and the after steps are not executed anymore; otherwise, transmitting the message based on the port range calculated in the Step 103, and because the message needs to be further transmitted to different VLAN in the embodiment of the present invention, so the step 105 and follow steps of step 105 are executed.

Step 105~step 106: identifying the VLAN identifier included in the message, and transmitting the message to the port that is corresponding to the VALN tag in order to implement message transmitting. '

In this embodiment, limited by the switch capability, during calculating the port set in Step 103, the identification of the VLAN identifier is not involved, so there is Step 105~Step 106,which identifies the identification of the VLAN and transmits the message to corresponding port according to identification result. In another embodiments, if the capability of switch is increased enough, which makes it possible that the identification of the VLAN identifier can be involved in Step 103, in the Step 104, after determining the port range calculated in Step 103 dose not exceed the port range determined in Step 102, the switch transmits the message according to the identified VLAN information directly, the implement of the present invention will not be effected.

Step 107 intersecting the port range calculated in Step 103 and the port range determined in Step 102 to obtain an intersection set.

Step 108 determining whether the intersection set is empty, if it is, go to Step 110; otherwise go to Step 109.

Step 109 transmitting the message to the ports of the intersection set, and discarding the messages which input ports are outside the intersection set.

Step 110 discarding the message, and not transmitting the messages.

With the Step 107~Step 110, the present invention can avoid to transmit the message to the ports which are outside the port range determined in Step 102, and the security problem of the network can be avoided.

In the above embodiment shown in Figure 1, within the port set defined by the subnet, network still can be separated into subnets with the general way of the Ethernet, and every subnet user can exclusively occupy the 4K VLAN address resource, since the method of the invention implements port information of the subnets to separate network into different subnets without using any VLAN address resource. In detail, there are only 12 bits (at most 4096 VLAN identifiers) for VLAN data in Ethernet format, so there are only 4K VLAN address resource which can be used. When applying the general VLAN separating method to separate the network, different VLAN addresses have to be assigned to the different subnets, part of the VALN address source should be used for separating, which will bring the result that the left VLAN address source is less than 4K and the every subnet user can not use entire 4K VLAN address source. On the contrary, with the method of the present invention, subnet users can apply entire 4K VLAN address resource to separate the network more independently.

From the above mention, it is understood that the method of the invention applies the port set of many ports to separate the network into different subnets, and the message is transmitted according to the separating result, so different subnets are strictly isolated during message transmitting. Furthermore, since the method implements the network separating in the physical layer, it is impossible that any illegal message with forged VLAN information are transmitted in the network, and thereby the network security problem of illegal entering the network will be avoided.

## Claims

1. A method for transmitting a message, wherein ports of a network are divided into multiple first port sets respectively corresponding to multiple subnets wherein one port belongs to one first port set; **characterized in that** each first port set is separated into multiple second port sets; and a first correspondence relationship between the first port sets and the subnets is established, each first port set occupies overall Virtual Local Area Network (VLAN) identifiers, each second port set occupies a different VLAN identifier in the overall VLAN identifiers; and
when a message is received, comprising:
determining a subnet from which the message is sent according to input port information of the message, and determining a first port set corresponding to the determined subnet according to the first correspondence relationship (102); and
identifying a VLAN identifier carried in the message, determining a second port set which is separated from the first port set and corresponds to the VLAN identifier, and transmitting the message via at least one port in the second port set.

2. The method according to Claim 1, wherein the ports of the network which are divided into the multiple first port set comprises: the ports of one switch in the network.

3. The method according to Claim 1, wherein the ports of the network which are divided into the multiple first port set comprises: the ports of multiple interconnected switches in the network.

4. The method according to Claim 1, further comprising:
obtaining a third port set by performing a protocol calculation for the message, the third port set comprising at least one port to which the message is to be transmitted based on the protocol applied to the message; and
obtaining an intersection set (107) of the second port set and the third port set, and transmitting the message via one port in the intersection set if the intersection set is not null (109).

5. The method according to Claim 1, wherein, the first correspondence relationship is denoted as a correspondence relationship between indexes of the subnets and the first port sets.

6. The method according to Claims 5, wherein the first correspondence relationship is denoted as a lookup table;
the process of determining a first port set corresponding to the determined subnet according to the first correspondence relationship comprises:
obtaining the index of the subnet from which the message is sent by searching the lookup table according to the input port information of the message; and
determining the first port set corresponding to the subnet from which the message is sent by searching the lookup table according to the obtained index.

7. The method according to any of Claims 1 to 6, wherein the first port set is denoted as a mask code.

## Patentansprüche

1. Verfahren zum Übertragen einer Nachricht, wobei Anschlüsse eines Netzwerkes in mehrere erste Anschlussgruppen unterteilt sind, welche jeweils mehreren Teilnetzen entsprechen, wobei ein Anschluss zu einer ersten Anschlussgruppe gehört; **dadurch gekennzeichnet, dass** jede erste Anschlussgruppe in mehrere zweite Anschlussgruppen aufgeteilt ist; und ein erstes Entsprechungsverhältnis zwischen den ersten Anschlussgruppen und den Teilnetzen hergestellt ist, wobei jede erste Anschlussgruppe die gesamten Kennungen eines virtuellen lokalen Netzwerkes (VLAN) belegt, jede zweite Anschlussgruppe eine andere VLAN-Kennung in den gesamten VLAN-Kennungen belegt; und
wenn eine Nachricht empfangen wird, aufweisend:
Bestimmen eines Teilnetzes, von welchem die Nachricht gemäß den Eingangsanschlussinformationen der Nachricht gesendet wird, und Bestimmen einer ersten Anschlussgruppe, welche dem bestimmten Teilnetz entspricht, gemäß dem ersten Entsprechungsverhältnis (102); und
Erkennen einer in der Nachricht mitgeführten bzw. enthaltenen VLAN-Kennung, Bestimmen einer zweiten Anschlussgruppe, welche von der ersten Anschlussgruppe getrennt ist und der VLAN-Kennung entspricht, und Übertragen der Nachricht über zumindest einen Anschluss in der zweiten Anschlussgruppe.

2. Verfahren nach Anspruch 1, wobei die Anschlüsse des Netzwerkes, welche in die mehreren ersten Anschlussgruppen unterteilt sind, Folgendes aufweisen: die Anschlüsse eines Schalters im Netzwerk.

3. Verfahren nach Anspruch 1, wobei die Anschlüsse des Netzwerkes, welche in die mehreren ersten Anschlussgruppen unterteilt sind, Folgendes aufweisen: die Anschlüsse von mehreren untereinander verbundenen Schaltern im Netzwerk.

4. Verfahren nach Anspruch 1, welches zudem Folgendes aufweist:
Erhalten einer dritten Anschlussgruppe durch Durchführen einer Protokollberechnung für die Nachricht, wobei die dritte Anschlussgruppe zumindest einen Anschluss aufweist, zu welchem die Nachricht basierend auf dem Protokoll zu übertragen ist, welches auf die Nachricht angewendet wird; und
Erhalten einer Überschneidungsgruppe (107) der zweiten Anschlussgruppe und dritten Anschlussgruppe und Übertragen der Nachricht über einen Anschluss in der Überschneidungsgruppe, wenn die Überschneidungsgruppe nicht null beträgt (109).

5. Verfahren nach Anspruch 1, wobei das erste Entsprechungsverhältnis als Entsprechungsverhältnis zwischen den Indizes der Teilnetze und den ersten Anschlussgruppen bezeichnet ist.

6. Verfahren nach Anspruch 5, wobei das erste Entsprechungsverhältnis als Nachschlagetabelle bezeichnet ist;
das Verfahren zum Bestimmen einer ersten Anschlussgruppe, welche dem bestimmten Teilnetz entspricht, gemäß dem ersten Entsprechungsverhältnis Folgendes aufweist:
Erhalten des Index des Teilnetzes, von welchem die Nachricht gesendet wird, durch Durchsuchen der Nachschlagetabelle gemäß den Eingangsanschlussinformationen der Nachricht; und
Bestimmen der ersten Anschlussgruppe, welche dem Teilnetz entspricht, von welchem die Nachricht gesendet wird, durch Durchsuchen der Nachschlagetabelle gemäß dem erhaltenen Index.

7. Verfahren nach einem der Ansprüche 1 bis 6, wobei die erste Anschlussgruppe als Maskencode bezeichnet ist.

## Revendications

1. Procédé pour transmettre un message, dans lequel des ports d'un réseau sont divisés en de multiples premiers ensembles de ports correspondant respectivement à de multiples sous-réseaux dans lesquels un port appartient à un premier ensemble de ports ; **caractérisé en ce que** chaque premier ensemble de ports est séparé en de multiples deuxièmes ensembles de ports ; et une première relation de correspondance entre les premiers ensembles de ports et les sous-réseaux est établie, chaque premier ensemble de ports occupe des identificateurs de réseau local virtuel (VLAN) d'ensemble, chaque deuxième ensemble de ports occupe un identificateur VLAN différent des identificateurs VLAN d'ensemble ; et
lorsqu'un message est reçu, comprenant :
la détermination d'un sous-réseau depuis lequel le message est envoyé selon des informations de port d'entrée du message, et la détermination d'un premier ensemble de ports correspondant au sous-réseau déterminé selon la première relation de correspondance (102) ; et
l'identification d'un identificateur VLAN acheminé dans le message, la détermination d'un deuxième ensemble de ports qui est séparé du premier ensemble de ports et correspond à l'identificateur VLAN, et la transmission du message via au moins un port du deuxième ensemble de ports.

2. Procédé selon la revendication 1, dans lequel les ports du réseau qui sont divisés en les multiples premiers ensembles de ports comprennent : les ports d'un commutateur dans le réseau.

3. Procédé selon la revendication 1, dans lequel les ports du réseau qui sont divisés en les multiples premiers ensembles de ports comprennent : les ports de multiples commutateurs interconnectés dans le réseau.

4. Procédé selon la revendication 1, comprenant en outre :
l'obtention d'un troisième ensemble de ports par l'exécution d'un calcul de protocole pour le message, le troisième ensemble de ports comprenant au moins un port auquel le message doit être transmis sur la base du protocole appliqué au message ; et
l'obtention d'un ensemble d'intersection (107) du deuxième ensemble de ports et du troisième ensemble de ports, et la transmission du message via un port dans l'ensemble d'intersection si l'ensemble d'intersection n'est pas nul (109).

5. Procédé selon la revendication 1, dans lequel, la première relation de correspondance est désignée comme une relation de correspondance entre des index des sous-réseaux et les premiers ensembles de ports.

6. Procédé selon la revendication 5, dans lequel la première relation de correspondance est désignée comme une table à consulter ;
le processus de détermination d'un premier ensemble de ports correspondant au sous-réseau déterminé selon la première relation de correspondance comprend :
l'obtention de l'index du sous-réseau depuis lequel le message est envoyé en recherchant dans la table à consulter selon les informations de port d'entrée du message ; et
la détermination du premier ensemble de ports correspondant au sous-réseau depuis lequel le message est envoyé en recherchant dans la table à consulter selon l'index obtenu.

7. Procédé selon l'une quelconque des revendications 1 à 6, dans lequel le premier ensemble de ports est désigné comme un code de masque.
